# EUROPÄISCHE PATENTSCHRIFT

(11) **EP 1 504 206 B1**
(45) Veröffentlichungstag und Bekanntmachung des Hinweises auf die Patenterteilung: **12.10.2005**
(21) Anmeldenummer: 03722223.9
(22) Anmeldetag: 18.03.2003
(51) Int. Cl.: F16J 9/26

(54) **VERFAHREN ZUR ERZEUGUNG VON VERSCHLEISSSCHICHTEN AN STAHLKOLBENRINGEN SOWIE STAHLKOLBENRING MIT EINER DERARTIGEN VERSCHLEISSSCHUTZSCHICHT**
METHOD FOR PRODUCING ANTI-WEAR COATINGS ON STEEL PISTON RINGS, AND STEEL PISTON RING COMPRISING ONE SUCH ANTI-WEAR COATING
PROCEDE DE PRODUCTION DE COUCHES D'USURE SUR DES SEGMENTS DE PISTON ACIER ET SEGMENT DE PISTON POURVU D'UNE TELLE COUCHE DE PROTECTION CONTRE L'USURE

(30) Priorität: 15.05.2002 DE 10221800
(43) Veröffentlichungstag der Anmeldung: 09.02.2005
(73) Patentinhaber: Federal-Mogul Burscheid GmbH, 51399 Burscheid (DE)
(72) Erfinder: HOPPE, Steffen, 51491 Overath (DE); SICHELSCHMIDT, Martin, 58256 Ennepetal (DE)
(86) Internationale Anmeldenummer: PCT/DE2003/000867
(87) Internationale Veröffentlichungsnummer: WO 2003/098079

(56) Entgegenhaltungen:
- EP-A- 0 849 511
- DE-A- 4 218 668
- DE-A- 4 224 561
- DE-A- 10 012 619
- GB-A- 662 213
- US-A- 5 104 132
- US-A- 5 154 433
- US-A- 5 743 536
- US-A- 5 851 659
- PATENT ABSTRACTS OF JAPAN vol. 2000, no. 13, 5. Februar 2001 (2001-02-05) & JP 2000 291800 A (TEIKOKU PISTON RING CO LTD), 20. Oktober 2000 (2000-10-20) & US 6 508 473 A (TEIKOKU PISTON RING CO.,LTD.) 21. Juni 2003 (2003-06-21)

## Beschreibung

Die Erfindung betrifft ein Verfahren zur Erzeugung von Verschleißschutzschichten an einem Stahlkolbenring. Ein derartiger Kolbenring ist aus der DE-A-100 126 19 bekannt.
Der DE-C 3 506 746 ist ein Kolbenring zu entnehmen, der einen aus Stahl oder Gußeisen geformten Ringkörper beinhaltet, der über seine gesamte Oberfläche mit einer nitrierten Schicht versehen ist, welche sich aus einer Diffusionsschicht und einer über dieser liegenden Verbundschicht zusammensetzt. An der von der Verbundschicht befreiten äußeren Umfangsfläche des Ringkörpers ist die Diffusionsschicht dieser äußeren Umfangsfläche mit einer plattierten oder aufgespritzten Schicht versehen.

In der DE-A 3 506 747 wird ein Kolbenring beschrieben, der an sämtlichen Oberflächen, mit Ausnahme der äußeren Umfangsfläche, mit einer nitrierten Schicht und an der äußeren Umfangsfläche mit einer plattierten oder aufgespritzten Schicht versehen ist.

Bisher wurden Nitrierschichten durch Gasoxinitrieren der betreffenden Oberflächen erzeugt, wobei vielfach Temperaturen > 500 °C benötigt wurden. Je nach zum Einsatz gelangender Laufflächenbeschichtung kann es hier geschehen, dass sich unerwünschte Härteverluste einstellen, die die Standzeit des Kolbenringes reduzieren.

Wird der gesamte Kolbenring mit einer Nitrierschicht versehen, kann es geschehen, dass die auf der äußeren Umfangsfläche aufgebrachte plattierte oder aufgespritzte Schicht keine optimale Verbindung mit dem Kolbenringwerkstoff eingehen kann. Da die innere Umfangsfläche des Kolbenringes in der Regel keinen Belastungen ausgesetzt wird, ist ein Verschleißschutz hier unter Umständen entbehrlich, es sei denn, dass der Kolbenring mit einem Federelement in Wirkverbindung gebracht wird.

Der Erfindung liegt die Aufgabe zugrunde, lediglich die dem Verschleiß ausgesetzten Bereiche eines Stahlkolbenringes in, vom Stand der Technik abweichenden Arbeitsschritten, dergestalt zu bearbeiten, dass die gewünschten Verschleißschutzeigenschaften erzielt werden, ohne dass es einer größeren Nachbearbeitung der betreffenden Flächenbereiche bedarf.

Diese Aufgabe wird gelöst durch ein Verfahren zur Erzeugung von Verschleißschutzschichten an einem Stahlkolbenring, indem die Lauffläche in einem ersten Arbeitsschritt zumindest partiell mit einer Laufflächenbeschichtung versehen wird und zur Erzeugung einer Härte HV 0,1 > 1400 in einem zweiten Arbeitsschritt zumindest die Flanken durch Plasmanitrieren mit einer Nitrierschicht versehen werden, dergestalt dass der Arbeitsschritt des Plasmanitrierens in Abhängigkeit von der zum Einsatz gelangenden Laufflächenbeschichtung im Temperaturbereich < 490 °C insbesondere ≤ 450 °C, durchgeführt wird.

Vorteilhafte Weiterbildungen des erfindungsgemäßen Verfahrens sind den zugehörigen Unteransprüchen zu entnehmen.

Diese Aufgabe wird auch bei einem Stahlkolbenring, beinhaltend eine Lauffläche, eine Innenfläche sowie dazwischen vorgesehene obere und untere Flanken, dadurch gelöst, dass die Lauffläche zumindest partiell mit einer Laufflächenbeschichtung versehen ist, und dass zumindest auf den Flanken eine durch Plasmanitrieren erzeugte Nitrierschicht vorgesehen ist.

Durch das erfindungsgemäße Verfahren sowie den erfindungsgemäßen Stahlkolbenring wird gegenüber dem Stand der Technik eine andersartige Erzeugung von Verschleißschutzschichten, insbesondere im Bereich der Flanken vorgeschlagen. Dies ist dann ausreichend, wenn der Kolbenring nicht mit Federelementen in Wirkverbindung gebracht wird, da die Innenfläche an sich keinen Belastungen ausgesetzt ist. Wird ein Federelement eingesetzt, sollte vorteilhafterweise auch die Innenseite des Kolbenringes plasmanitriert werden. Das Plasmanitrieren kann gegenüber dem Gasoxinitrieren bei Temperaturen, vorteilhafterweise unterhalb von 450°C durchgeführt werden, wobei nach dem Plasmanitrieren Härten > 1400 HV 0,1 realisierbar sind. Durch diese Maßnahme kann eine erhebliche Reduzierung insbesondere des Flankenverschleißes herbeigeführt werden. Da zunächst die Laufflächenbeschichtung erzeugt wird und eine Beschichtung der Innenfläche, mit Ausnahme vernachlässigbarer Nitrierpunkte, vielfach nicht notwendig ist, können insbesondere die einem erhöhten Verschleiß ausgesetzten Flanken durch das Plasmanitrierverfahren in entsprechender Weise geschützt werden.

Als Nitrierverfahren kann das sogenannte Pulsplasmanitrierverfahren eingesetzt werden, das im Gegensatz zum Gasoxinitrieren eine Behandlung in geringeren Temperaturbereichen (< 490 °C) ermöglicht. Hierdurch werden die Laufflächenschichten nicht beschädigt. Insbesondere Cr-Schichten dürfen nicht bei höheren Temperaturen nachbehandelt werden, da es sonst zu einem Härteabfall kommt.

Bei Einsatz insbesondere des Pulsplasmanitrierverfahrens können die Ringe mit einem definierten Abstand zueinander auf einem Dom zentriert werden. Dabei werden hier bedarfsweise nur die Flanken nitriert, wobei lediglich vereinzelt auch Nitrierschichtbereiche auf der Innenfläche zu finden sind, die jedoch nicht bewußt erzeugt werden, vielmehr sich zufällig ergeben. Soll auch die Innenseite plasmanitriert werden, ist der Dom entbehrlich.

Die bei niedrigen Temperaturen entstehende durch Plasmanitrieren erzeugte Nitrierschicht unterscheidet sich von der bekannten, durch Gasoxinitrieren erzeugte Nitrierschicht, gebildet bei Temperaturen um etwa 560 °C durch feinverteilte/wesentlich kleinere Karbide und somit eine stärkere Gitterverspannung (dies führt zu höherer Härte der Schicht).
Die Ausbildung der Verbindungsschicht ist weiter reduziert, ebenso die Aufrauung Aufrauung der Oberfläche. Weiterhin ergibt sich eine im Vergleich zum Gasnitrieren zum Gasnitrieren, Gasoxinitrieren geringfügig bessere Korrosionsbeständigkeit.

Vielfach enthalten thermische Schutzschichten an der Lauffläche Molybdän, wodurch beim Plasmanitrieren vorteilhafterweise auch noch eine höhere Härte und Verschleißbeständigkeit herbeigeführt werden kann.
Der Erfindungsgegenstand ist anhand eines Ausführungsbeispieles in der Zeichnung dargestellt und wird wie folgt beschrieben. Es zeigen
- Figur 1: Ausführungsbeispiele von Stahlkolbenringen mit nicht plasmanitrierter Innenfläche
- Figur 2: Ausführungsbeispiele von Stahlkolbenringen mit plasmanitrierten Flanken und Innenflächen

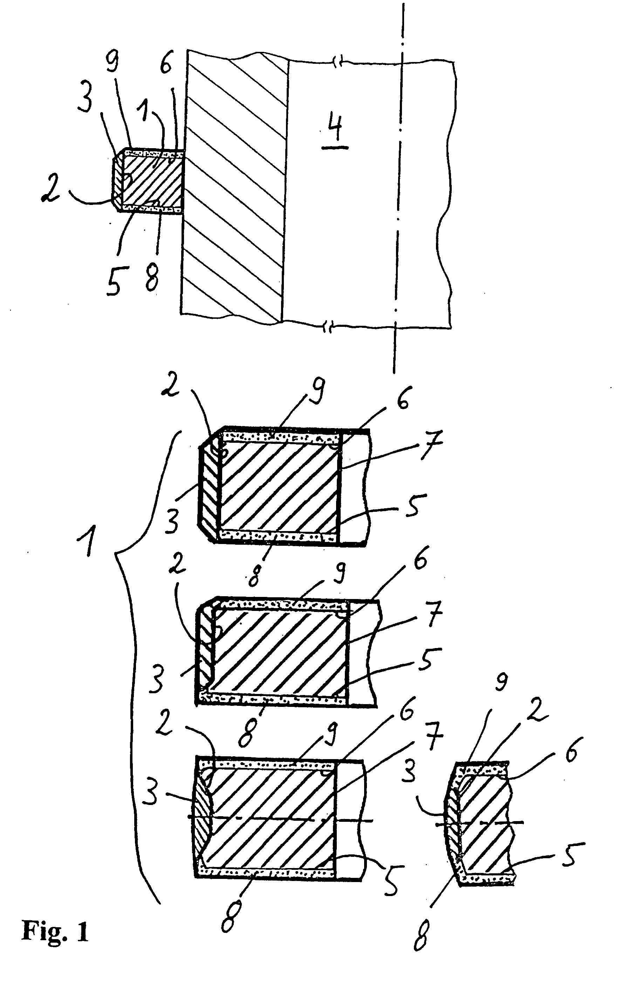

Figur 1 zeigt Stahlkolbenringe 1, deren Zusammensetzung in diesem Beispiel unter anderem 17% Chrom aufweisen sollen. In einem ersten Arbeitsschritt wird die Lauffläche 2 zumindest partiell mit einer Molybdän enthaltenden thermischen Spritzschicht 3 als Laufflächenbeschichtung versehen. Dargestellt sind vier Kolbenringquerschnitte mit unterschiedlichen Laufflächenbeschichtungen 3. Selbige können in gekammerter Form vorgesehen werden oder unmittelbar zumindest partiell auf oder in die Lauffläche 2 auf- oder eingebracht werden. Anschließend wird der Stahlkolbenring 2 auf einem nur angedeuteten Dom 4 aufgebracht. Nachdem mehrere Stahlkolbenringe 1 auf dem Dom 4 mit definiertem Abstand zueinander positioniert worden sind, werden in diesem Beispiel nur die Flanken 5,6 durch das Pulsplasmanitrierverfahren nitriert, wobei die Innenfläche 7 des Stahlkolbenringes 1 nicht bewußt mit behandelt wird, sondern vielmehr eher zufällig hier Nitrierschichtablagerungen gebildet werden. Beim Einsatz des Plusplasmanitrierverfahrens werden die Stahlkolbenringe 1 im Temperaturbereich < 450 °C nitriert, wobei in diesem Beispiel die Flanken 5,6 mit Nitrierschichten 8,9 von etwa 80 µm Dicke versehen werden. Die unmittelbar nach der Nitrierung vorgenommene Härtemessung hat ergeben, dass im Bereich der Flanken 5,6 Härten von > 1500 HV 0,1 realisiert werden konnten. Je nach Ausgestaltung der Spritzschicht 3 ist die Nitrierschicht 8,9 bis in den Bereich der Spritzschicht 3 geführt.

Durch dieses Verfahren werden infolge der geringen Temperaturen beim Plasmanitrieren keine negativen Effekte im Bereich der Laufflächenbeschichtung 3 erzeugt. Gleichzeitig wird in diesem Beispiel eine weitestgehende Nitrierschichtfreiheit im Bereich der Innenfläche 7 gewährleistet.

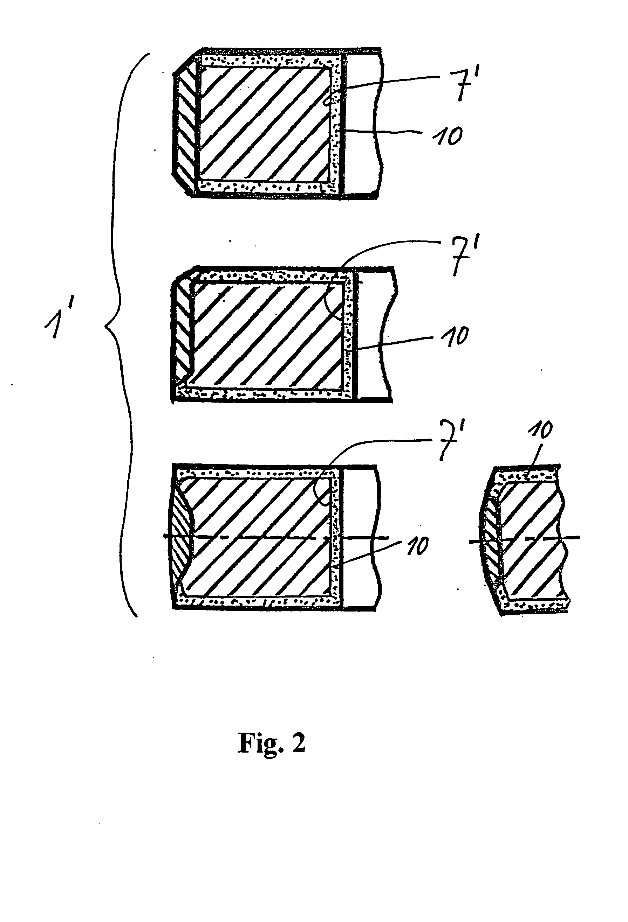

Figur 2 zeigt Stahlkolbenringe 1', bei denen, abweichend zu den Darstellungen gem. Figur 1, auch die Innenfläche 7' mit einer durch Plasmanitrieren erzeugten Nitrierschicht 10 versehen ist. Dies ist dann sinnvoll, wenn der Stahlkolbenring 1' mit einem hier nicht weiter dargestellten Federelement in Wirkverbindung gebracht wird, durch welches auf die Innenfläche 7' Kräfte ausgeübt werden.

## Patentansprüche

1. Verfahren zur Erzeugung von Verschleißschutzschichten an einem Stahlkolbenring (1) mit unter anderem 17 % Chrom, indem die Lauffläche (2) in einem ersten Arbeitsschritt zumindest partiell mit einer galvanischen Schicht oder einer thermischen Spritzschicht (3) überzogen wird, die als Laufflächenbeschichtung fungiert und anschließend in einem zweiten Arbeitsschritt zumindest die Flanken (5,6) durch Plasmanitrieren mit einer Nitrierschicht (8,9) versehen werden, dergestalt, dass der Arbeitsschritt des Plasmanitrierens in Abhängigkeit von der zum Einsatz gelangenden Laufflächenbeschichtung im Temperaturbereich ≤ 450 °C, durchgeführt wird um eine Härte HV 0,1 > 1400 zu erzeugen.

2. Verfahren nach Anspruch 1, **dadurch gekennzeichnet, dass** bei weitestgehender Schichtfreiheit im Bereich der Innenfläche (7) ausschließlich die Flanken (5,6) durch Plasmanitrieren mit einer Nitrierschicht versehen werden.

3. Verfahren nach Anspruch 1, **dadurch gekennzeichnet, dass** alle nicht mit einer Laufflächenbeschichtung (3) versehenen Bereiche (5,6,7') mit einer Nitrierschicht (8,9,10) versehen werden.

4. Verfahren nach einem der Ansprüche 1 bis 3, **dadurch gekennzeichnet, dass** die Nitrierschicht (8,9,10) mit einer Schichtdicke < 100 µm ausgebildet wird.

## Claims

1. Method for generating anti-wear coatings on a steel piston ring (1) with, amongst others, 17% chromium by coating in a first working step the running surface (2) at least partially with a galvanic layer or a thermal spray layer (3), which acts as a running surface coating, and then in a second working step providing at least the flanks (5, 6) with a nitriding layer (8, 9) by plasma nitriding such that the working step of the plasma nitriding is performed in the temperature range ≤ 450°C as a function of the running surface coating coming into use in order to generate a hardness HV 0.1 > 1400.

2. Method according to Claim 1, **characterised in that** with the most substantial absence of coating in the region of the inside face (7), only the flanks (5, 6) are provided with a nitriding layer by plasma nitriding.

3. Method according to Claim 1, **characterised in that** all the areas (5, 6, 7') not provided with a running surface coating (3) are provided with a nitriding layer (8, 9, 10).

4. Method according to one of Claims 1 to 3, **characterised in that** the nitriding layer (8, 9, 10) is configured with a layer thickness of < 100 µm.

## Revendications

1. Procédé pour générer des couches de protection contre l'usure sur un segment de piston en acier (1) avec entre autres 17 % de chrome, du fait que la surface de frottement (2) est revêtue dans une première étape de travail au moins partiellement d'une couche galvanique ou d'une couche de projection (3) thermique, qui fait office de revêtement de surface de frottement et au moins les flancs (5, 6) sont dotées ensuite dans une deuxième étape de travail d'une couche de nitruration (8, 9) par nitruration au plasma de telle sorte que l'étape de travail de la nitruration au plasma est effectuée en fonction du revêtement de la surface de frottement utilisée dans la plage de température ≤ 450°C, afin de générer une dureté HV 0,1 > 1400.

2. Procédé selon la revendication 1, **caractérisé en ce que**, avec une très large absence de couche dans la zone de la surface intérieure (7), seules les flancs (5, 6) sont dotés d'une couche de nitruration par nitruration au plasma.

3. Procédé selon la revendication 1, **caractérisée en ce que** toutes les zones (5, 6, 7') non dotées d'un revêtement de surface de frottement (3) sont dotées d'une couche de nitruration (8, 9, 10).

4. Procédé selon l'une quelconque des revendications 1 à 3, **caractérisé en ce que** la couche de nitruration (8, 9, 10) est réalisée avec une épaisseur de couche < 100 µm.
